# EUROPÄISCHE PATENTANMELDUNG

(11) **EP 4 826 472 A1**
(43) Veröffentlichungstag der Anmeldung: **21.10.2026**
(21) Anmeldenummer: 26172191.4
(22) Anmeldetag: 14.04.2026
(51) Int. Cl.: G05B 19/401, B23Q 17/20, B23Q 17/22, B23Q 17/24

(54) **VERFAHREN ZUR BERÜHRUNGSLOSEN ABSTANDSMESSUNG IN EINEM ARBEITSRAUM EINER WERKZEUGMASCHINE UND VORRICHTUNG**

(30) Priorität: 16.04.2025 DE 102025114936
(71) Anmelder: Starrag GmbH, 09117 Chemnitz (DE)
(72) Erfinder: Seyfert, Sören, 09128 Chemnitz (DE); Novák, Jirí, 09126 Chemnitz (DE)
(74) Vertreter: Rumrich, Gabriele

(57) **Zusammenfassung**

Die Erfindung betrifft ein Verfahren zur berührungslosen Abstandsmessung in einem Arbeitsraum einer Werkzeugmaschine in einem Arbeitsraum einer Werkzeugmaschine mit einer NC-Steuerung, wobei die Abstandsmessung mittels einer im Arbeitsraum angeordneten Messeinrichtung erfolgt, wobei die Messeinrichtung mit der Werkzeugspindel mittels NC-Achsen im Arbeitsraum verfahren wird und berührungslos die Konturen und die Lage des Werkstücks und die Lage der Spannelemente als Ist-Wert erfasst und mit mindestens einem zuvor festgelegten Soll-Wert des Werkstücks und der Spannelemente abgeglichen werden, wobei der Abgleich zwischen dem Ist-Wert und dem Soll-Wert vor der Bearbeitung des Werkstücks erfolgt und im Fall einer Abweichung abzüglich einer Toleranz zwischen dem Ist-Wert und dem Soll-Wert die Bearbeitung nicht startet und/oder eine Meldung über eine Ausgabeeinheit der Werkzeugmaschine ausgegeben wird, wobei die Soll-Werte für die Anordnung des Werkstücks und der, das Werkstück spannenden, Spannelemente sowie für Konturen und/oder Bohrungen und in Form von Messpunkten in einer Speichereinrichtung abgelegt werden. Gemäß der Vorrichtung weist die Werkzeugmaschine einen Support mit einer Werkzeugspindel und eine berührungslose Messeinrichtung zur Abstandsmessung auf, wobei die Messeinrichtung mit den Achsen der Werkzeugspindel verfahrbar ist und wobei die Messeinrichtung in einem Arbeitsraum der Werkzeugmaschine angeordnet ist und den Abstand zwischen der Messeinrichtung an der Werkzeugspindel und dem Werkstück und/oder zwischen der Messeinrichtung an der Werkzeugspindel und den Spannelementen erfasst.

## Beschreibung

Die Erfindung betrifft ein Verfahren zur berührungslosen Abstandsmessungen in einem Arbeitsraum einer Werkzeugmaschine sowie eine zugehörige Vorrichtung nach dem Oberbegriff des ersten und neunten Patentanspruchs.

In modernen Werkzeugmaschinen werden Bauteile häufig mit mechanischen Werkstückmesstastern vermessen. Diese Messtaster werden aus einem Werkzeugmagazin in die Hauptspindel der Maschine eingewechselt und anschließend mittels NC-Achsen zur Messposition bewegt. Dieser Prozess ist zeitaufwändig, da der Werkzeugwechsel sowie die Bewegung zur Messposition eine erhebliche Zeitverzögerung verursachen. Zusätzlich müssen Messtaster mit niedrigen Vorschubgeschwindigkeiten betrieben werden, um Beschädigungen zu vermeiden. Aufgrund der Kontaktmessung besteht zudem ein erhöhtes Risiko einer Kollision zwischen dem Messtaster oder der Hauptspindel und dem Messobjekt.

Aus der Druckschrift DE 10 2016 221 458 A1 ist eine Bearbeitungsvorrichtung zur Bearbeitung von Oberflächen eines zu bearbeitenden Werkstücks aus Holz, Kunststoff, Glasfaserkunststoff, Glas und dergleichen, bekannt. Die Vorrichtung weist einen Bearbeitungskopf auf, der in der Lage ist, eine Bewegung relativ zu dem zu bearbeitenden Werkstück entlang dreier Translationsachsen (X, Y, Z) auszuführen. Des Weiteren kann der Bearbeitungskopf um eine erste Rotationsachse gedreht werden. Der Bearbeitungskopf weist eine Spindelträgereinheit mit einer Spindel auf, wobei die Spindelträgereinheit mit dem Bearbeitungskopf drehbeweglich um eine zweite Rotationsachse drehverbunden ist.

Die Bearbeitungsvorrichtung weist eine Vorrichtung zur Abstandserkennung auf, die fest mit der Spindelträgereinheit verbunden ist und den Abstand der Spindelträgereinheit zu der Oberfläche des zu bearbeitenden Werkstücks erfasst.

Mit der Vorrichtung können Oberflächenunregelmäßigkeiten erkannt und die Werkzeugposition dynamisch angepasst werden.

Die Druckschrift US 2013/0071198 A1 beschreibt eine numerisch gesteuerte Werkzeugmaschine mit einer Hauptspindel, an der ein Werkzeug drehbar und abnehmbar befestigt ist. Des Weiteren weist die Werkzeugmaschine einen Tisch zur Aufnahme eines Werkstücks und Werkzeugmessmittel zum Messen einer Länge und eines Durchmessers des an der Hauptspindel befestigten Werkzeugs auf.

An der Hauptspindel ist ein Werkstückmessmittel zum berührungslosen Messen einer dreidimensionalen Form, einer Position und einer Ausrichtung des auf dem Tisch befestigten Werkstücks angeordnet. Mittels einer Steuereinrichtung kann die Position eines Bearbeitungsstartpunktes und eine Neigung einer Bezugsebene auf Basis der Informationen des Werkstückmessmittels ermittelt werden. Anschließend wird die Hauptspindel und/oder der Tisch gesteuert.

Mit dem Verfahren wird ein schnelleres Verfahren des Werkzeugs in einem Nicht-Bearbeitungsbereich erreicht. Eine weitere Steuerung einer numerisch gesteuerten Werkzeugmaschine ist aus der Druckschrift US 2013/090755 A1 bekannt. Auch mit dieser Vorrichtung wird ein Werkstück mittels mehrerer optischer Sensoren erfasst.

Ein Verfahren und eine Einrichtung zum Betrieb einer Werkzeugmaschine ist aus der Druckschrift EP 2 058 717 B1 bekannt. Gemäß dem Verfahren wird eine aktuelle Konfiguration der Werkzeugmaschine ermittelt und mit einer, in einem Teileprogramm hinterlegten Simulationskonfiguration der Werkzeugmaschine verglichen. Bei Nichtübereinstimmung der aktuellen Konfiguration mit der Simulationskonfiguration wird eine Warnmeldung erzeugt.

Eine numerische Steuerung ist aus der Druckschrift DE 10 2014 103 194 A1 bekannt. Die numerische Steuerung weist einen dreidimensionalen Modellspeicher auf, mittels dessen ein dreidimensionales Modell von zumindest einem Werkstück und einer Einspannvorrichtung gespeichert wird. Mittels eines Formprozessors wird ein Modell auf Grundlage der Messdaten erzeugt, in welchem das Werkstück und die Einspannvorrichtung ganzheitlich repräsentiert werden. Mittels des ermittelten Modells erfolgt eine Steuerung des Werkzeugs zur Bearbeitung des Werkstücks.

Aus der Druckschrift DE 10 2013 018 654 A1 ist ein Verfahren und eine Vorrichtung zur Detektion und zur Korrektur einer räumlichen Lage eines in einer Positionierungseinrichtung gehaltenen Werkstücks bekannt. Gemäß dem Verfahren wird ein Bearbeitungskopf mit mindestens einem Sensor und einem Positionserfassungsmittel zu mindestens einer Messposition zugestellt. Anschließend erfolgt ein berührungsloses Erfassen einer Ist-Position eines Messpunktes des Werkstücks an der Messposition unter Verwendung des Bearbeitungskopfes und ein Vergleich der erfassten Ist-Position mit einer erwarteten Soll-Position. Dabei erfolgt ein Feststellen von Abweichungswerten zwischen der Ist-Position und der Soll-Position. Die festgestellten Abweichungswerte werden mit einem zulässigen Toleranzwert verglichen, wobei der Bearbeitungskopf einer Kontur zugestellt wird, sofern die festgestellte Abweichung innerhalb des zulässigen Toleranzwertes liegt. Alternativ wird der Bearbeitungskopf und das Werkstück zueinander und zu der Kontur derart ausgerichtet, dass eine Abweichung der Ist-Position nach dem Ausrichten innerhalb der zulässigen Toleranzwerte liegt. Das Verfahren und die Vorrichtung sind dafür vorgesehen, abweichende Toleranzen durch Nachstellen des Werkstücks und des Bearbeitungskopfes auszugleichen.

Aufgabe der Erfindung ist es, ein Verfahren zur berührungslosen Abstandsmessungen in einem Arbeitsraum einer Werkzeugmaschine und eine zugehörige Vorrichtung zu entwickeln, welches eine effiziente und sichere Vermessung von Bauteilen im Arbeitsraum einer Werkzeugmaschine ermöglicht. Dabei soll der Zeitaufwand durch den Verzicht auf mechanische Werkstückmesstaster reduziert und die Kollisionsgefahr eines Messwerkzeugs mit dem Werkstück durch den Einsatz eines berührungslosen Messsystems minimiert werden. Mit der Erfindung soll die korrekte Einspannung eines Werkstücks sowie das Vorhandensein von Konturen und Bohrungen für den nächsten Bearbeitungsschritt sichergestellt werden, um Kollisionen zwischen Bearbeitungskopf und Werkstück zu vermeiden.

Diese Aufgabe wird mit den Merkmalen des ersten und neunten Patentanspruchs gelöst.

Vorteilhafte Ausgestaltungen ergeben sich aus den Unteransprüchen.

Das erfindungsgemäße Verfahren zur berührungslosen Abstandsmessung in einem Arbeitsraum einer Werkzeugmaschine weist eine NC-Steuerung auf, wobei die Abstandsmessung mittels einer im Arbeitsraum angeordneten Messeinrichtung erfolgt. Die Messeinrichtung wird mit der Werkzeugspindel mittels NC-Achsen im Arbeitsraum verfahren, wobei berührungslos die Konturen und die Lage des Werkstücks und die Lage der Spannelemente als Ist-Wert erfasst und mit mindestens einem zuvor festgelegten Soll-Wert des Werkstücks und der Spannelemente abgeglichen werden, wobei der Abgleich zwischen dem Ist-Wert und dem Soll-Wert vor der Bearbeitung des Werkstücks erfolgt. Im Fall einer Abweichung abzüglich einer Toleranz zwischen dem Ist-Wert und dem Soll-Wert wird die Bearbeitung nicht startet und/oder eine Meldung über eine Ausgabeeinheit der Werkzeugmaschine ausgegeben, wobei die Soll-Werte für die Anordnung des Werkstücks und der, das Werkstück spannenden Spannelemente sowie für Konturen und/oder Bohrungen des Werkstücks in Form von Messpunkten in einer Speichereinrichtung abgelegt sind.

Mit dieser Ausgestaltung ist eine schnelle Kontrolle der korrekten Einspannung des Werkstücks im Arbeitsraum in Bezug auf die Spannelemente möglich. Des Weiteren kann durch die Erfassung der Kontur und Bohrungen des Werkstücks sichergestellt werden, dass diese für die weitere Bearbeitung vorhanden sind.

Vorzugsweise ist das Werkstück in einer Spannvorrichtung angeordnet, wobei die Lage der, das Werkstück aufnehmenden Spannvorrichtung als Ist-Wert erfasst und mit mindestens einem zuvor festgelegten Soll-Wert der Spannvorrichtung abgeglichen wird. Die Soll-Werte für die Lage der Spannvorrichtung sind in Form von Messpunkten in der Speichereinrichtung abgelegt.

Gemäß einer vorteilhaften Ausgestaltung werden Soll-Werte für die Anordnung des Werkstücks, Konturen und/oder Bohrungen und der, das Werkstück spannenden, Spannelemente an einem ersten, in der Werkzeugmaschine eingespannten Werkstück mittels der berührungslosen Messeinrichtung in einzelnen Messpunkten erfasst und in der Speichereinrichtung abgelegt. Dieses erste Werkstück wird mittels Sichtkontrolle des Bedieners auf die korrekte Position des Werkstücks, der Spannvorrichtung und der Spannelemente überprüft. Nach der Sichtkontrolle wird das Werkstück mittels der Messeinrichtung vermessen und die Soll-Werte als Referenz gespeichert.

Besonders vorteilhaft umfassen die Messpunkte die Position der Spannelemente und/oder die Position und Form von Bohrungen im Werkstück und/oder die Werkstückkontur.

Die Messung kann in einer ersten Ausgestaltung in Form einer statischen Punktmessung erfolgen, wobei nachfolgend wenigstens ein Messwert in der NC-Steuerung mit einem Sollwert verglichen wird, derart, dass bei Übereinstimmung des wenigstens einen Messwerts mit dem Sollwert das Werkstück als korrekt eingespannt ausgegeben wird.

In einer alternativen Ausgestaltung erfolgt die Messung dynamisch, wobei die Messeinrichtung mittels der NC-Achsen bewegt und der gemessene Abstand kontinuierlich ausgewertet wird, wobei bei Erreichen eines zuvor eingestellten Werts das Werkstück und dessen Kantenpositionen als detektiert erfasst wird und die aktuelle Position der NC-Achsen gespeichert werden.

Des Weiteren kann bei der dynamischen Messung die Abstandsmesseinrichtung mittels der NC-Achsen derart positioniert werden, dass sie die Oberfläche des Bauteils erfasst, wobei das Bauteil relativ zur Messeinrichtung bewegt und sein Abstand kontinuierlich gemessen wird, wobei mit Hilfe von Variablen in der NC-Steuerung lokale Maxima bzw. Minima einschließlich eines globalen Maximums oder Minimums sowie der zugehörigen Position der bewegten NC-Achse zur Erfassung eines minimalen und maximalen Abstands einer Kontur des Werkstücks berechnet werden. Somit kann die Koaxialität des Werkstücks zum Spanntisch der Werkzeugmaschine erfasst werden.

Zum Schutz vor Spänen und Kühlschmierstoffen kann die Messeinrichtung eine Schutzabdeckung aufweisen, wobei die Schutzabdeckung zur Abstandsmessung geöffnet ist und vor dem Start der Bearbeitung des Werkstücks mittels einer Maschinensteuerung der Werkzeugmaschine geschlossen wird. Dazu findet bevorzugt eine Speicherprogrammierbare Steuerung Anwendung.

Die erfindungsgemäße Vorrichtung zur berührungslosen Abstandsmessung in einem Arbeitsraum einer Werkzeugmaschine weist einen Support mit einer daran angeordneten Werkzeugspindel und eine berührungslose Messeinrichtung zur Abstandsmessung auf. Die Messeinrichtung ist mit den Achsen der Werkzeugspindel verfahrbar, wobei die Messeinrichtung in dem Arbeitsraum der Werkzeugmaschine angeordnet ist und den Abstand zwischen der Messeinrichtung an der Werkzeugspindel und dem Werkstück und/oder zwischen der Messeinrichtung an der Werkzeugspindel und den Spannelementen erfasst.

Bevorzugt ist die berührungslose Messeinrichtung in Form eines Lasermesssystems auf dem Support der Werkzeugmaschine angeordnet. Jedoch sind auch Messungen mittels Radartechnik oder Ultraschall denkbar. Als weiterer Anbauort für das Messsystem ist die Hauptspindel denkbar. Dazu kann die Messeinrichtung als Werkzeug in die Werkzeugaufnahme der Spindel eingesetzt werden.

Das Lasermesssystem ist vorzugsweise zum Schutz vor Verunreinigung in einem Gehäuse hinter einer Abdeckung angeordnet, wobei die Abdeckung über die Maschinensteuerung ansteuerbar ist. Die Abdeckung zur Messung des Werkstücks geöffnet sein und wird vor der Bearbeitung zum Schutz vor Spänen und Kühlschmierstoffen geschlossen.

Mit dem erfindungsgemäßen Verfahren kann eine statische Punktmessung erfolgen. Damit kann das Vorhandensein eines Bauteils, bzw. einer Kontur erfasst werden.

Die Messeinrichtung wird bei dieser Messung mittels der NC-Achsen so positioniert, dass sie die zu messende Messstelle erfasst. Anschließend wird ein Wert aufgenommen, der in der NC-Steuerung mit einem Sollwert verglichen wird. Stimmt der Messwert mit dem Sollwert überein (inklusive Toleranz), ist das Werkstück korrekt eingespannt.

Andernfalls wird der Maschinenbediener mittels einer Ausgabeeinheit zu einer Sichtkontrolle aufgefordert.

Der Sollwert wird bei einem ersten korrekt eingespannten Bauteil, welches durch den Bediener kontrolliert wurde, mittels der Messeinrichtung aufgenommen und in der NC-Steuerung gespeichert.

Des Weiteren kann mit der statischen Punktmessung auch das Vorhandensein einer Kontur, zum Beispiel einer Bohrung oder der Zustand eines Spannelements (offen oder geschlossen) kontrolliert werden.

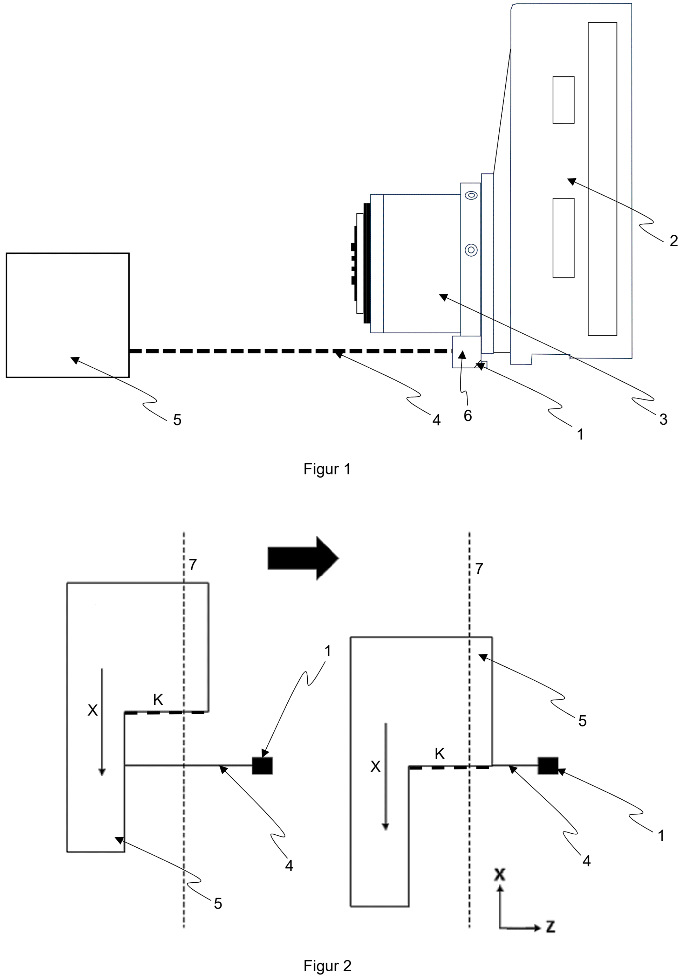

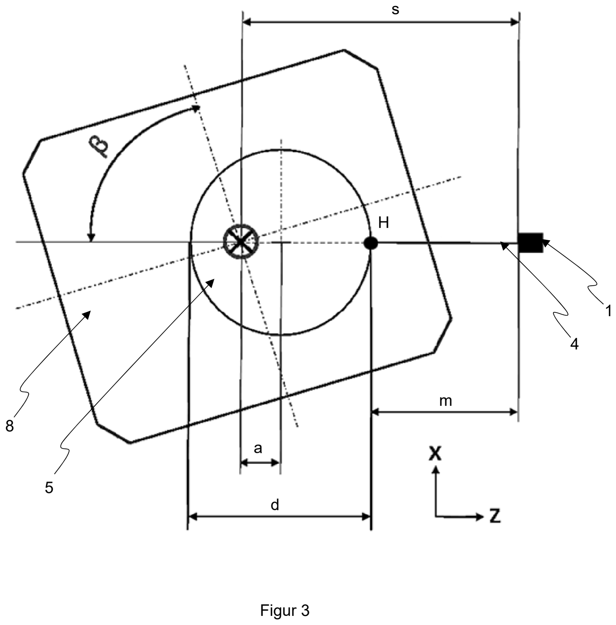

Eine weitere mögliche Anwendung sind dynamische Messverfahren die näher in den nachfolgenden Figuren 2 und 3 beschrieben werden.

Mit der vorliegenden Erfindung können Bauteile mittels der berührungslosen Abstandsmesseinrichtung effizient und sicher vermessen werden. Es kann erkannt werden, ob das Bauteil richtig in der Vorrichtung eingelegt ist. Des Weiteren können groben Abweichungen, zum Beispiel ein falsches oder verkehrt herum eingelegtes Teil erkannt werden.

Neben dem Bauteil kann mit der vorliegenden Erfindung ermittelt werden, ob die Spannvorrichtung korrekt gespannt ist und ob die Spannelemente in die richtige Lage geschwenkt sind.

Eine weitere Möglichkeit der Erfindung ist die Erkennung bestimmter Merkmale am Bauteil/Rohteil in Form von Gussaufmaßen oder das Feststellen ob Bohrungen oder Taschen vorhanden sind.

Die Erfindung wird nachfolgend an einem Ausführungsbeispiel und zugehörigen Zeichnungen näher erläutert.

Es zeigen:
- Figur 1: eine Anordnung einer Messeinrichtung an einer Werkzeugspindel,
- Figur 2: eine schematische Darstellung eines Verfahrens zur Kantenpositionserkennung,
- Figur 3: eine schematische Darstellung eines Verfahrens zur Lokalisierung des minimalen und maximalen Abstands einer Kontur.

Figur 1 zeigt eine Vorrichtung für eine Werkzeugmaschine mit einer Messeinrichtung 1 an einem Support 2, wobei der Support 2 des Weiteren eine Werkzeugspindel 3 aufweist, dass die Messeinrichtung 1 mit den NC-Achsen der Werkzeugmaschine verfahrbar ist. Die Messeinrichtung 1 ist in Form eines Lasertriangulationssensors ausgebildet, wobei mittels eines Laserstrahls 4 der Abstand zu einem Werkstück 5 gemessen wird. Da die Messeinrichtung 1 vor ungünstigen Umgebungseinflüssen wie chemischen Kühlschmierstoffen und Späneaufprall geschützt werden sollte, ist die Messeinrichtung 1 in einem Gehäuse 6 mit einer schließbaren Schutzabdeckung montiert. Die Schutzabdeckung kann mittels der Maschinensteuerung der Werkzeugmaschine, beziehungsweise mittels einer speicherprogrammierbaren Steuerung angesteuert (öffnen/schließen) werden.

Die Figuren 2 und 3 zeigen Möglichkeiten der dynamischen Bauteilvermessung mit der Vorrichtung gemäß Figur 1.

Figur 2 zeigt eine schematische Darstellung des Verfahrens zur Kantenpositionserkennung im Bearbeitungsraum einer Werkzeugmaschine mittels der Vorrichtung gemäß Figur 1. Für eine bessere Darstellung ist lediglich die Messeinrichtung der Werkzeugmaschine dargestellt.

Die Messeinrichtung 1 ist in Form eines Lasertriangulationssensors ausgebildet, wobei der Abstand zwischen dem Lasertriangulationssensor 1 und dem Werkstück 5 mittels des Laserstrahls 4 kontinuierlich erfasst und ausgewertet wird. Dazu wird das Werkstück gemäß Figur 2 entlang der Achse X verfahren. Erreicht der Abstand einen zuvor eingestellten Wert, wird das Werkstück als detektiert angesehen und die aktuelle Position der NC-Achsen der Werkzeugmaschine gespeichert. Zur Erfassung der Kontur des Werkstücks 5 wird ein Umschaltpegel 7 in der Maschinensteuerung hinterlegt. Durch Erfassung des Umschaltpegels 7 wird die Kante K als Kontur des Werkstücks 5 ermittelt und das Werkstück als detektiert gespeichert. Die aktuelle Position der NC-Achsen wird in der Maschinensteuerung abgelegt.

Eine alternative Messung mit der Vorrichtung gemäß Figur 1 ist in der Figur 3 dargestellt. Mit dem Verfahren gemäß Figur 3 werden der minimale und maximale Abstand m einer Kontur eines Werkstücks 5 zur Messeinrichtung 1 mittels des Laserstrahls 4 mit der Länge m erfasst. Das Werkstück 5 ist gemäß Figur 3 in Form eines rotationssymmetrischen Körpers mit einem Durchmesser d ausgebildet auf einem Spanntisch 8 eingespannt, wobei zur vereinfachten Darstellung nur die Achsen X und Z berücksichtigt werden.

Die Messeinrichtung 1 wird mittels der NC-Achsen der Werkzeugmaschine derart positioniert, dass sie die Oberfläche des Werkstücks 5 erfasst. Das Werkstück 5 wird relativ zur Messeinrichtung 1 translatorisch oder rotatorisch bewegt, wobei der Abstand kontinuierlich gemessen wird. Mithilfe von Variablen in der NC-Steuerung werden lokale Maxima bzw. Minima berechnet. Des Weiteren können ein globales Maximum und Minimum mit zugehörigen Positionen der NC-Achsen ermittelt und gespeichert werden, wobei neben den Koordinaten in X, Y und Z Richtung auch ein Winkel β des Spanntisches erfasst wird, der den Winkel zwischen dem Spanntisch und dem Höchstpunkt H am Werkstück 5 angibt. Neben dem Winkel β wird ein Abstand a, der den Abstand zwischen der Werkstückachse und der Spanntischachse sowie ein Abstand s zwischen der Spanntischachse und der Messeinrichtung erfasst.

Mit einem Verfahren nach Figur 3 kann eine Koaxialität eines gespannten Werkstücks 5 zum Spanntisch ermittelt werden.

Gegenüber dem Stand der Technik finden bei der vorliegenden Erfindung als Material Stahl, Guss, Leichtmetalle und Legierungen Anwendung. Des Weiteren erfolgt mit dem vorliegenden Verfahren und der Vorrichtung eine Kontrolle mittels Messung vor der Bearbeitung. Es wird eine einmalige Messwertaufnahme und ein Vergleich mit einem Sollwert mit einer anschließenden Auswertung durchgeführt. Mit dieser Messwertaufnahme und dem Vergleich zu einem Soll-Zustand kann eine Beurteilung "in Ordnung/nicht in Ordnung" erfolgen.

Das Messsystem ist ständig in dem Arbeitsraum vorhanden, wodurch kein Werkzeugwechsel notwendig ist. Eine derartige Ausgestaltung führt zu einer enormen Zeitersparnis.

### Bezugszeichenliste

- 1: Messeinrichtung
- 2: Support
- 3: Werkzeugspindel
- 4: Laserstrahl
- 5: Werkstück
- 6: Gehäuse
- 7: Umschaltpegel
- 8: Spanntisch

- a: Abstand zwischen der Werkstückachse und der Spanntischachse
- d: Durchmesser
- H: Höchstpunkt am Werkstück
- m: Länge Laserstrahl
- s: Abstand zwischen der Spanntischachse und der Messeinrichtung
- β: Winkel zwischen dem Spanntisch und dem Höchstpunkt des Werkstücks

## Patentansprüche

1. Verfahren zur berührungslosen Abstandsmessung in einem Arbeitsraum einer Werkzeugmaschine mit einer NC-Steuerung, wobei die Abstandsmessung mittels einer im Arbeitsraum angeordneten Messeinrichtung (1) erfolgt, **dadurch gekennzeichnet, dass** die Messeinrichtung (1) mit einer Werkzeugspindel (3) mittels NC-Achsen im Arbeitsraum verfahren wird und dass berührungslos Konturen und die Lage eines Werkstücks (5) und die Lage von Spannelemente als Ist-Wert erfasst und mit mindestens einem zuvor festgelegten Soll-Wert des Werkstücks (5) und der Spannelemente abgeglichen werden, wobei der Abgleich zwischen dem Ist-Wert und dem Soll-Wert vor der Bearbeitung des Werkstücks (5) erfolgt und im Fall einer Abweichung abzüglich einer Toleranz zwischen dem Ist-Wert und dem Soll-Wert die Bearbeitung nicht startet und/oder eine Meldung über eine Ausgabeeinheit der Werkzeugmaschine ausgegeben wird, wobei die Soll-Werte für die Anordnung des Werkstücks (5) und der, das Werkstück (5) spannenden Spannelemente sowie für Konturen und/oder Bohrungen des Werkstücks (5) in Form von Messpunkten in einer Speichereinrichtung abgelegt sind.

2. Verfahren nach Anspruch 1, **dadurch gekennzeichnet, dass** das Werkstück (5) in einer Spannvorrichtung aufgenommen ist, wobei die Lage der, das Werkstück (5) aufnehmenden Spannvorrichtung als Ist-Wert erfasst und mit mindestens einem zuvor festgelegten Soll-Wert der Spannvorrichtung abgeglichen wird, wobei die Soll-Werte die Lage der Spannvorrichtung in Form von Messpunkten in der Speichereinrichtung abgelegt sind.

3. Verfahren nach Anspruch 1 oder 2, **dadurch gekennzeichnet, dass** die Soll-Werte an einem ersten, in der Werkzeugmaschine eingespannten Werkstück (5) mittels der berührungslosen Messeinrichtung (1) in einzelnen Messpunkten erfasst und in der Speichereinrichtung abgelegt werden.

4. Verfahren nach Anspruch 3, **dadurch gekennzeichnet, dass** die Messpunkte die Position der Spannelemente und die Position und Form von Bohrungen im Werkstück (5) und die Werkstückkontur umfassen.

5. Verfahren nach einem der Ansprüche 1 bis 4, **dadurch gekennzeichnet, dass** die Messung in Form einer statischen Punktmessung erfolgt, wobei nachfolgend wenigstens ein Messwert in der NC-Steuerung mit einem Sollwert verglichen wird, derart, dass bei Übereinstimmung des wenigstens einen Messwerts mit dem Sollwert das Werkstück (5) als korrekt eingespannt ausgegeben wird.

6. Verfahren nach einem der Ansprüche 1 bis 4, **dadurch gekennzeichnet, dass** die Messung in Form einer dynamischen Messung erfolgt, wobei die Messeinrichtung (1) mittels der NC-Achsen bewegt und der gemessene Abstand kontinuierlich ausgewertet wird, wobei bei Erreichen eines zuvor eingestellten Werts das Werkstück (5) und dessen Kantenpositionen als detektiert erfasst wird und die aktuelle Position der NC-Achsen gespeichert werden.

7. Verfahren nach Anspruch 6, **dadurch gekennzeichnet, dass** die Abstandsmesseinrichtung mittels der NC-Achsen derart positioniert wird, dass sie die Oberfläche des Bauteils erfasst, wobei das Bauteil relativ zur Messeinrichtung (1) bewegt und sein Abstand kontinuierlich gemessen wird, wobei mit Hilfe von Variablen in der NC-Steuerung lokale Maxima bzw. Minima einschließlich eines globalen Maximums oder Minimums sowie der zugehörigen Position der bewegten NC-Achse zur Erfassung eines minimalen und maximalen Abstands einer Kontur des Werkstücks (5) berechnet werden.

8. Verfahren nach einem der vorangegangenen Ansprüche, **dadurch gekennzeichnet, dass** die Messeinrichtung (1) eine Schutzabdeckung zum Schutz vor Spänen und Kühlschmiermittel aufweist und dass die Schutzabdeckung zur Abstandsmessung geöffnet ist und vor dem Start der Bearbeitung des Werkstücks (5) mittels einer Maschinensteuerung der Werkzeugmaschine geschlossen wird.

9. Vorrichtung zur berührungslosen Abstandsmessung in einem Arbeitsraum einer Werkzeugmaschine, wobei die Werkzeugmaschine einen Support (2) mit einer Werkzeugspindel (3) und eine berührungslose Messeinrichtung (1) zur Abstandsmessung aufweist, **dadurch gekennzeichnet, dass** die Messeinrichtung (1) mit den Achsen der Werkzeugspindel (3) verfahrbar ist, wobei die Messeinrichtung (1) zur Erfassung des Abstands zwischen der Messeinrichtung (1) an der Werkzeugspindel (3) und dem Werkstück (5) und/oder zwischen der Messeinrichtung (1) an der Werkzeugspindel (3) und den Spannelementen in dem Arbeitsraum der Werkzeugmaschine angeordnet ist.

10. Vorrichtung nach Anspruch 9, **dadurch gekennzeichnet, dass** die berührungslose Messeinrichtung (1) in Form eines Lasermesssystems auf dem Support (2) der Werkzeugmaschine angeordnet ist.

11. Vorrichtung nach Anspruch 9 oder 10, **dadurch gekennzeichnet, dass** das Lasermesssystem zum Schutz vor Verunreinigung in einem Gehäuse (6) hinter einer Abdeckung angeordnet ist, wobei die Abdeckung über die Maschinensteuerung ansteuerbar ist.
